# EUROPEAN PATENT APPLICATION

(11) **EP 3 018 382 A1**
(43) Date of publication of application: **11.05.2016**
(21) Application number: 15193076.5
(22) Date of filing: 04.11.2015
(51) Int. Cl.: F16F 15/14, F16C 3/02

(54) **TUBE YOKE ASSEMBLY AND DRIVESHAFT ASSEMBLY FORMED THEREWITH**

(30) Priority: 05.11.2014 US 201462075443 P
(71) Applicant: Dana Automotive Systems Group , LLC, Maumee, OH 43537 (US)
(72) Inventor: Feichter, Marc T., Perrysburg, OH Ohio 43551 (US); Smith, DaWuan A., Sylvania, OH Ohio 43560 (US); Burnard, Jonathan, Maumee, OH Ohio 43537 (US); Stanley, Julie L., Oregon, OH Ohio 43616 (US)
(74) Representative: Pfenning, Meinig & Partner mbB

(57) **Abstract**

A driveshaft assembly includes a tube having a balancing weight attached thereto. A tube yoke is attached to the tube. A damper assembly is attached to the tube yoke. The damper assembly includes a dampening media and an inertia ring. The dampening media is disposed over an outer surface of the tube yoke and the inertia ring is secured to the dampening media.

## Description

### CROSS-REFERENCE TO RELATED APPLICATION

This application is claiming the benefit, under 35 U.S. C. 119(e), of the provisional application which was granted Serial No. 62/075,443 and filed on November 5, 2014, the entire disclosure of which is hereby incorporated by reference.

### BACKGROUND OF THE INVENTION

This invention relates in general to a tube yoke assembly. In particular, this invention relates to a tube yoke assembly and a driveshaft assembly formed therewith.

A driveline is used to transmit rotational power from a source, such as an engine, to a driven component, such as a pair of wheels in a vehicle. A driveshaft assembly and a slip yoke assembly are included in a typical driveline. Typically, a damper is attached to the slip yoke assembly to reduce vibrations caused by the rotation and misalignment of components of the driveline. The configurations of the damper and slip yoke assembly that are known in the art are complex, heavy and expensive to manufacture. The aforementioned limitations add cost to and reduce the fuel economy of the vehicle.

Accordingly, it would be desirable to provide an improved assembly that reduces the cost, complexity and overall weight of the driveline.

### BRIEF SUMMARY OF THE INVENTION

Embodiments of a driveshaft assembly are provided.

In an embodiment, the driveshaft assembly comprises a tube having a balancing weight attached thereto. A tube yoke is attached to the tube. A damper assembly is attached to the tube yoke. The damper assembly comprises a dampening media and an inertia ring. The dampening media is disposed over an outer surface of the tube yoke and the inertia ring is secured to the dampening media.

In another embodiment, the driveshaft assembly comprises a tube having a balancing weight attached thereto. A tube yoke is attached to the tube. A damper assembly is press fit to the tube yoke. The damper assembly comprises a tuned rubber dampening media and an inertia ring. The tuned rubber dampening media is in direct contact with an outer surface of the tube yoke and the inertia ring is secured to the dampening media.

In yet another embodiment, the driveshaft assembly comprises an end fitting. A first tube yoke is coupled to the end fitting via a cardan type universal joint. A first damper assembly is attached to the first tube yoke. A tube is attached on a first end thereof to the first tube yoke. The tube comprises an outer surface having a balancing weight attached thereto. A second tube yoke is attached to a second end of the tube.

### BRIEF DESCRIPTION OF THE SEVERAL VIEWS OF THE DRAWINGS

FIG. 1 is a perspective view of an embodiment of a driveshaft assembly in accordance with the invention;
FIG. 2 is a perspective view of an embodiment of a tube yoke assembly in accordance with the invention which is utilized in the driveshaft assembly of FIG. 1;
FIG. 3 is a plan view of the driveshaft assembly of FIG. 1;
FIG. 4 is a sectional view of an embodiment of the driveshaft assembly of FIG. 1 taken along line 4 - 4;
FIG. 5 is an enlarged view of a portion of the driveshaft assembly of FIG. 3 illustrating an embodiment of the driveshaft assembly;
FIG. 5A is an enlarged view illustrating a portion of a driveshaft assembly in accordance with the invention and alternative embodiments to the embodiments illustrated in FIGs. 4 and 5;
FiG. 6 is a sectional view of another embodiment of the driveshaft assembly of FIG. 1 taken along line 6 - 6; and
FIG. 7 is a sectional view of a further embodiment of the driveshaft assembly of FIG. 1 taken along line 7 - 7.

### DETAILED DESCRIPTION OF THE INVENTION

It is to be understood that the invention may assume various alternative orientations and step sequences, except where expressly specified to the contrary. It is also to be understood that the specific assemblies and processes illustrated in the attached drawings, and described in the following specification are simply exemplary embodiments of the inventive concepts. Hence, specific dimensions, directions, or other physical characteristics relating to the embodiments disclosed are not to be considered as limiting, unless expressly stated otherwise. Also, although they may not be, like elements in various embodiments may be commonly referred to with like reference numerals within this section of the application.

A tube yoke assembly and driveshaft assembly formed therewith will be described herein. The tube yoke assembly and driveshaft assembly will be described in connection with a driveline (not fully depicted) for a vehicle (not depicted). The tube yoke assembly and driveshaft assembly may have applications to on-highway and off-highway vehicles. However, it should be understood that the tube yoke assembly and driveshaft assembly could also have industrial, locomotive, and aerospace applications.

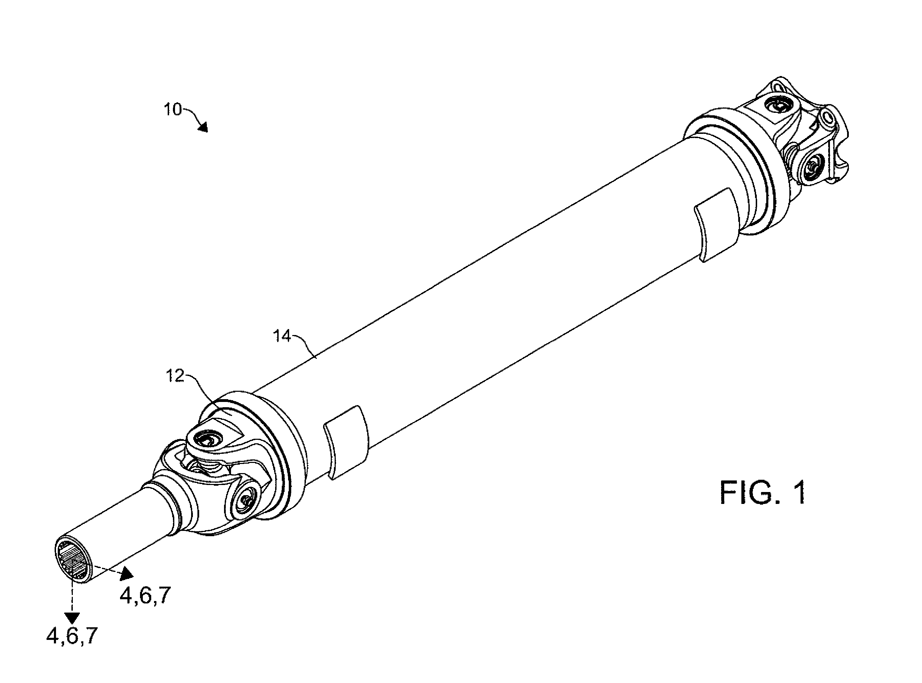

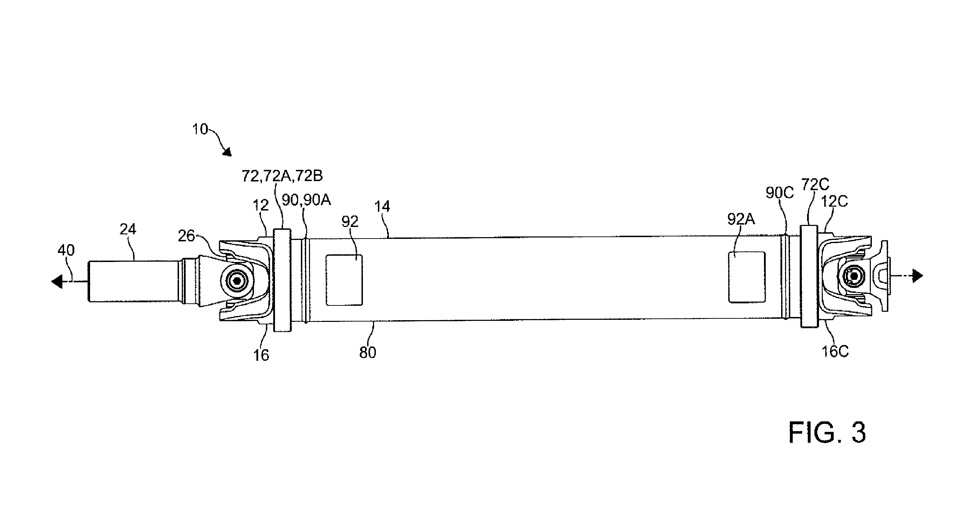

Referring now to the drawings, there is illustrated in FIGs. 1 and 3 a driveshaft assembly 10. The driveshaft assembly 10 comprises a tube yoke assembly 12 and a tube 14. The driveshaft assembly 10, tube yoke assembly 12 and tube 14 rotate about a longitudinal axis 40.

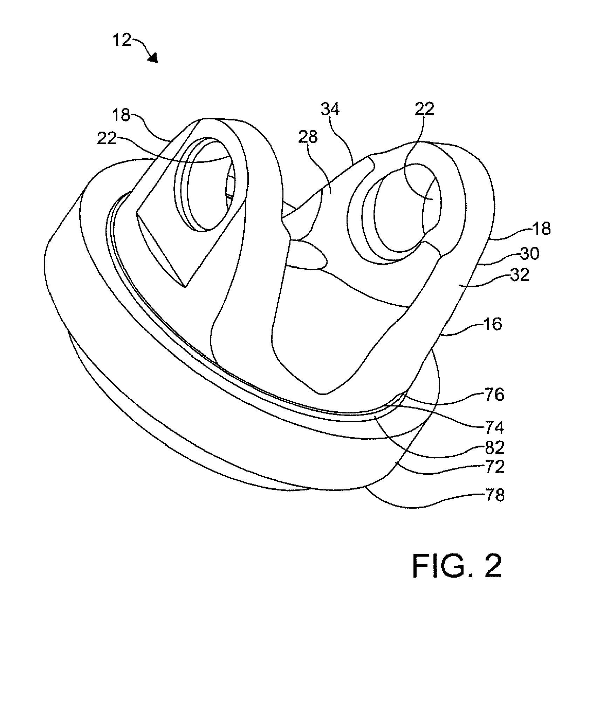

Referring now to FIGs. 1-4, the tube yoke assembly 12 comprises a tube yoke 16. Preferably, the tube yoke 16 is formed from a rigid and durable material. A preferred material for use in forming the tube yoke 16 is aluminum. However, the tube yoke 16 may be formed from other rigid durable materials such as steel or high strength cast iron.

The tube yoke 16 comprises a pair of spaced apart lug ears 18. The lug ears 18 are spaced apart from each other by approximately 180 degrees. Each lug ear 18 is attached to a body portion 20 of the tube yoke 16 and extends in a generally axial direction from the body portion 20. Preferably, the lug ears 18 are formed in a unitary fashion with the body portion 20.

Each lug ear 18 has a generally cylindrical opening 22 formed therethrough. The openings 22 are coaxial with one another. The driveshaft assembly 10 may comprise an end fitting 24. As illustrated, the end fitting 24 may be a slip yoke assembly. However, in other embodiments (not depicted), the end fitting may be a flange yoke, yoke shaft, end yoke or another type of suitable end fitting.

The tube yoke assembly 12 and end fitting 24 are operably coupled together via a cardan type universal joint 26. In operation, torque supplied by the vehicle's transmission (not depicted) or a transfer case (not depicted) is communicated to the end fitting 24 and the driveshaft 10 via the universal joint 26. The cardan type universal joint 26 is attached to the tube yoke 16 via the openings 22 formed in the lug ears 18. Cardan type universal joints known in the art are suitable for use in the driveline and driveshaft assembly 10 and with the tube yoke assembly 12.

Each lug ear 18 includes an inner surface 28 and an outer surface 30. The inner surface 28 and the outer surface 30 extend from opposite ends of each opening 22 to the body portion 20. The inner surfaces 28 face each other and separate the outer surfaces 30 from each other. A pair of side surfaces 32, 34 are provided between the inner surface 28 and the outer surface 30 of each lug ear 18.

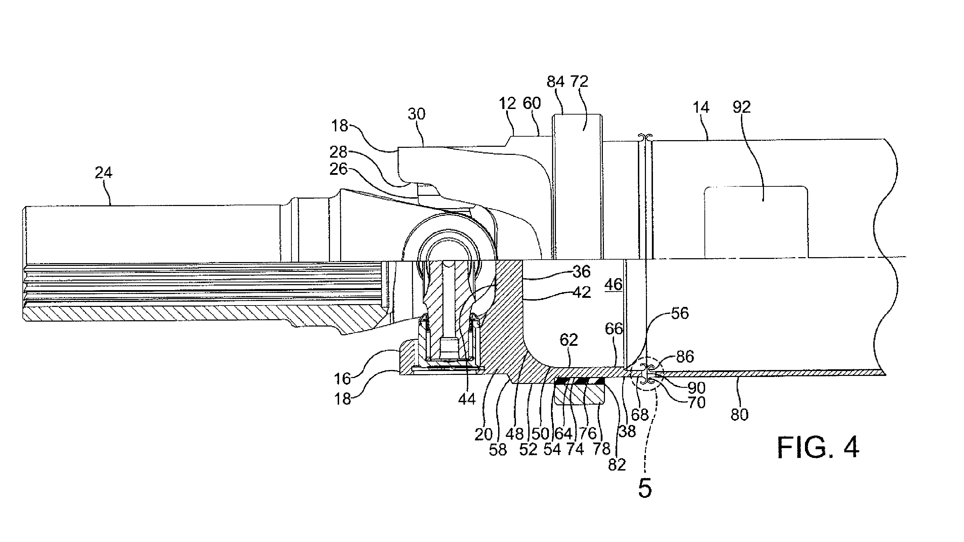

As best shown in FIG. 4, the body portion 20 is generally of a U-shape in cross-section and comprises a base 36 and a wall 38. The base 36 and the wall 38 are concentric and preferably formed in a unitary manner with each other.

The base 36 has an inboard surface 42 and outboard surface 44. When the tube yoke 16 is attached to the tube 14, the inboard surface 42 is positioned in a substantially perpendicular relationship with the tube 14. The outboard surface 44 is positioned radially in from the inner surfaces 28 of the lug ears 18. A cavity 46 is defined by the base 36 and the wall 38. The cavity 46 helps to reduce the weight of the assembly 12.

The wall 38 is generally annular and extends from the base 36 in a generally axial direction therefrom opposite the lug ears 18. Typically, a fillet portion 48 connects an inner surface 50 of the wall 38 to the inboard surface 42 of the base 36. The wall 38 comprises a shoulder portion 52, seat portion 54 and tube seat portion 56.

A ramped transition 58 connects the shoulder portion 52 to the base 36. The shoulder portion 52 extends in an axial direction and is generally annular. The shoulder portion 52 has an outer surface 60. The outer surface 60 defines a diameter. Preferably, the diameter is substantially constant.

The seat portion 54 is directly attached to the shoulder portion 52. The seat portion 54 has an inner surface 62 and an outer surface 64. The inner surface 62 defines an inner diameter of the seat portion 54. Preferably, the inner diameter is of a size which is substantially constant or gradually changes (increases or decreases) in an axial direction. Additionally, the outer surface 64 defines an outer diameter of the seat portion 54. The outer diameter is of a size which may be substantially constant.

The tube seat portion 56 is directly attached to the seat portion 54. The tube seat portion 56 is of a generally cylindrical shape. The tube seat portion 56 has an inner surface 66, an outer surface 68 and an end surface 70 which connects the inner surface 66 to the outer surface 68 on ends thereof. The inner surface 66 defines an inner diameter of the tube seat portion 56. The inner diameter is of a size which may be substantially constant. Additionally, the outer surface 68 defines an outer diameter of the tube seat portion 56. The outer diameter is of a size which may be substantially constant.

The tube yoke assembly 12 also comprises a damper assembly 72, 72A, 72B. The damper assembly 72, 72A, 72B reduces the vibration and resulting noise caused by the rotation and misalignment of components of the driveline. The damper assembly 72, 72A, 72B is disposed axially between the tube 14 and the universal joint 26. In this position, the damper assembly 72, 72A, 72B is attached to and positioned around a portion 54-56 of the tube yoke 16. Preferably, the damper assembly 72, 72A, 72B abuts the shoulder portion 54 and is directly attached to the outer surface 64 of the seat portion 54. The damper assembly 72, 72A, 72B can be attached to the seat portion 54 via one or more of an interference type fit, a retainer (not depicted) or staking (not depicted). A preferable interference type fit is a press fit. However, it should be appreciated that additional types of interference fits may be utilized to attach the damper assembly 72, 72A, 72B to the tube yoke 16. Retainers such as, for example, a snap ring may be utilized to attach the damper assembly to the yoke. In embodiments (not depicted) where a snap ring is utilized as the retainer, an annular groove is provided in the outer surface of the seat portion for engaging the snap ring. Staking processes known in the art are suitable for attaching the damper assembly to the tube yoke.

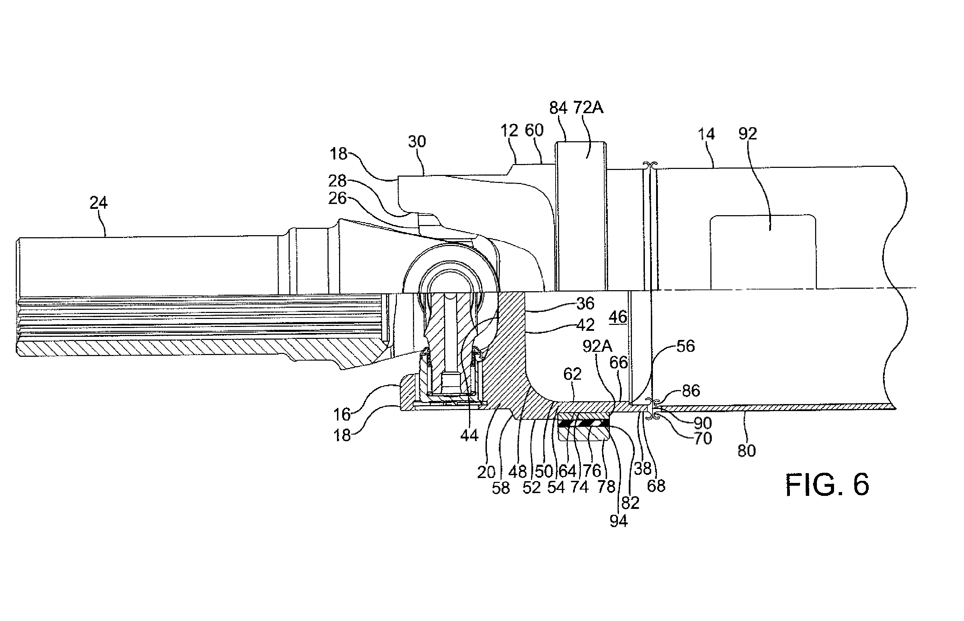

In an embodiment, the damper assembly 72, 72A, 72B is aligned with the tube yoke 16 and rotates therewith about the longitudinal axis 40 of the assembly 10. Preferably, the damper assembly 72, 72A, 72B is of a generally annular shape. In this embodiment, the damper assembly 72, 72A, 72B has an aperture 74. In an embodiment, like the one illustrated in FIG. 4, the aperture 74 is defined by a dampening media 76. In other embodiments, like the ones illustrated in FIGs. 6-7, the aperture 74 is defined by a substrate 92A, 92B. The aperture 74 is of a diameter. The diameter of the aperture 74 is of a size which is greater than that of the inner surface 62 of the seat portion 54. In an embodiment, the diameter of the aperture 74 is of a size which is equal to that of the outer diameter defined by the outer surface 68 of the tube seat portion 56. In another embodiment, the diameter defined by the aperture 74 is of a size which is substantially equal to the outer diameter defined by the outer surface 64 of the seat portion 54.

In an embodiment, like the one illustrated in FIG. 4, the damper assembly 72 comprises the dampening media 76 and an inertia ring 78. In another embodiment, the damper assembly consists of the dampening media 76 and the inertia ring 78. In other embodiments, like the ones illustrated in FIGs. 6-7, the damper assembly 72A, 72B comprises the dampening media 76, the inertia ring 78, and the substrate 92A, 92B. In yet another embodiment, the damper assembly consists of the dampening media 76, the inertia ring 78, and the substrate 92A, 92B.

The dampening media 76 is disposed over an outer surface 60, 64, 68 of the tube yoke 16. In certain embodiments, the dampening media 76 is disposed around an outer surface 60, 64, 68 of the tube yoke 16. In an embodiment, like the one illustrated in FIG. 4, the dampening media 76 is directly attached to an outer surface 60, 64, 68 of the tube yoke 16. Preferably, in this embodiment and as illustrated best in FIG. 4, the dampening media 76 is attached to the outer surface 64 of the seat portion 54. However, in other embodiments (not depicted), the dampening media may be directly attached to the other portions of the yoke and/or a portion of a tube. In yet other embodiments, like those illustrated in FIGs. 6-7, the dampening media 76 is directly attached to an outer surface 94 of the substrate 92A, 92B. In these embodiments, the substrate 92A, 92B is disposed over and directly attached to an outer surface 60, 64, 68 of the tube yoke 16.

Utilizing a substrate 92A, 92B in the damper assembly 72A, 72B provides additional mass and may add inertia to the driveshaft assembly 10. The substrate 92A, 92B is formed from a rigid and durable material. Preferably, the substrate 92A, 92B is metallic. The substrate 92A, 92B may be formed by stamping, casting, or forging. Preferred metals used to form the substrate 92A, 92B are steel, iron, and aluminum.

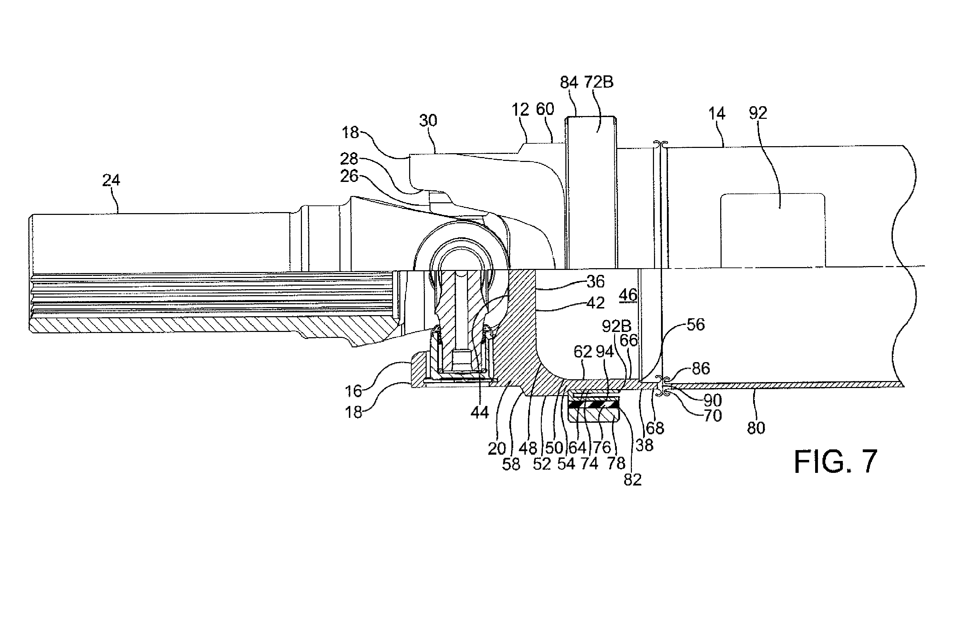

As illustrated best in FIGs. 6-7, the substrate 92A, 92B is disposed over an outer surface 60, 64, 68 of the tube yoke 16. In these embodiments, the substrate 92A, 92B may be disposed around an outer surface 60, 64, 68 of the tube yoke 16. In an embodiment, like the one illustrated in FIG. 6, the substrate 92A is a hub. In an embodiment, the hub may be of a generally annular shape. As illustrated in FIG. 6, in cross-section, the hub may be of a rectangular shape. In another embodiment, like the one illustrated in FIG. 7, the substrate 92B is a slinger. As illustrated in FIG. 7, in cross-section, the slinger may be C-shaped.

The inertia ring 78 is secured to the dampening media 76. In the embodiment illustrated in FIG. 4, the inertia ring 78 is separated from the outer surface 64 of the seat portion 54 by the dampening media 76. In the embodiments illustrated in FIGs. 6-7, the inertia ring 78 is separated from the outer surface 64 of the seat portion 54 by the dampening media 76 and the substrate 92A, 92B. Preferably, the inertia ring 78 is secured to an outer portion 82 of the dampening media 76. The inertia ring 78 may be secured to the dampening media 76 by molding, a press-fit or any other suitable method.

Preferably, the dampening media 76 is of an annular shape. In an embodiment, like the one illustrated in FIG. 4, the dampening media 76 defines an inner diameter of the damper assembly 72. In other embodiments, like those illustrated in FIGs. 6-7, the substrate 92A, 92B defines an inner diameter of the damper assembly 72A, 72B. The dampening media 76 may comprise a fluid. In one such embodiment, the dampening media 76 comprises a silicone fluid. In other embodiments, the dampening media 76 may comprise a gel. In yet another embodiment, the dampening media 76 may comprise a thermoplastic. In still other embodiments, the dampening media 76 comprises an elastomeric material such as, for example, rubber or the like. A preferred elastomeric material for use as the dampening media 76 is a rubber tuned to the frequency exhibited by the driveshaft to reduce the vibrations of the driveline, which may also be referred to herein as "tuned rubber."

Inertia rings known in the art are suitable for use in the assemblies 10, 12. Preferably, the inertia ring 78 is of an annular shape. In an embodiment, the inertia ring 78 defines an outer diameter 84 of the damper assembly 72, 72A, 72B. The outer diameter 84 of the damper assembly 72, 72A, 72B is of a size which is greater than a diameter defined by the outer surface 60 of the shoulder portion 52 and an outer diameter defined by an outer surface 80 of the tube 14.

Preferably, the tube 14 is a hollow, generally cylindrical member as is illustrated best in FIG. 4. The tube 14 is formed from a rigid and durable material such as, for example, a metal or metal alloy. In an embodiment, the tube 14 is formed of aluminum. However, the tube 14 may be formed of another metal such as steel.

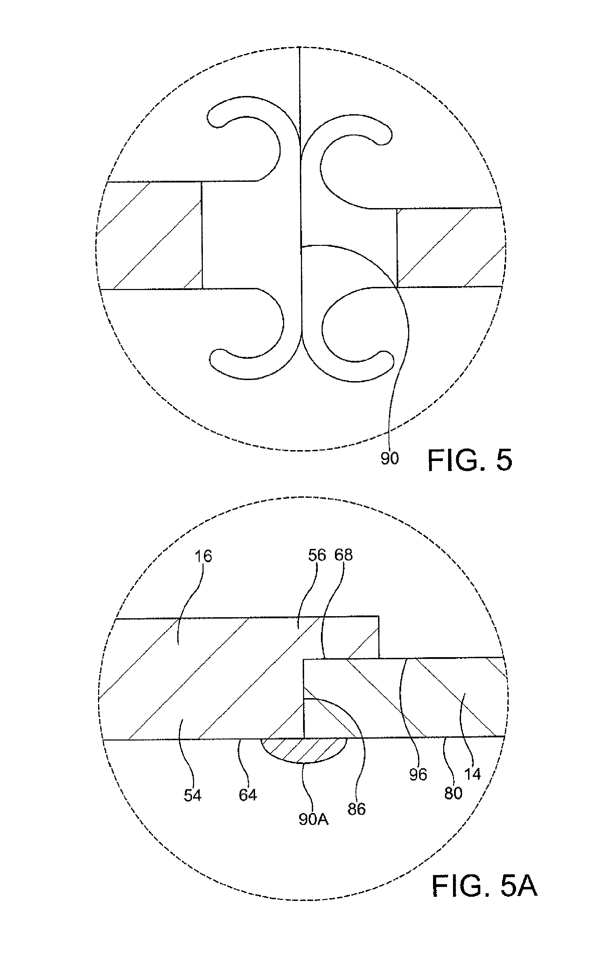

Referring now to FIGs. 3-5 and 5A, in certain embodiments, the tube 14 and the tube yoke 16 are attached on a first end 86 of the tube 14. Preferably, the tube 14 is directly attached to the tube seat portion 56 of the tube yoke 16. In an embodiment like the one shown in FIG. 4, the first end 86 of the tube 14 is attached to the end surface 70 of the tube seat portion 56. In other embodiments like the one shown in FIG. 5A, the end 86 of the tube is disposed over the end surface of the tube seat portion 56. In these embodiments, an inner surface 96 of the tube 14 surrounds at least a portion of the outer surface 68 of the tube seat portion 56.

The outer surface 80 of the tube 14 defines an outer diameter. The outer diameter is substantially constant over the length of the tube 14. In an embodiment like the one illustrated in FIGs. 4-5, the outer surface 80 of the tube 14 is aligned with the outer surface 68 of the tube seat portion 56. In this embodiment, the outer diameter defined by the outer surface 80 of the tube 14 is of a size which is equal or substantially equal to that of the outer diameter defined by the outer surface 68 of the tube seat portion 56. In another embodiment, like the one illustrated in FIG. 5A, the outer surface 80 of the tube 14 is aligned with the outer surface 64 of the seat portion 54. In this embodiment, the outer diameter defined by the outer surface 80 of the tube 14 is of a size which is equal or substantially equal to that of the outer diameter defined by the outer surface 64 of the seat portion 54. The tube 14 can be attached to the tube seat portion 56 in any number of manners. However, it is preferred that the tube 14 is attached to the tube seat portion 56 by a weld 90, 90A. In an embodiment, like the one illustrated in FIGs. 4-5, the weld 90 is a butt weld. In another embodiment, like the one illustrated in FIG. 5A, the weld 90A is a lap weld. The weld 90, 90A can be formed by any one of a friction, magnetically impelled arc butt, laser, mig, magnetic pulse or other welding process.

A balancing weight 92 is attached to the outer surface 80 of the tube 14. In this position, the balancing weight 92 is spaced apart from tube yoke 12 and the damper assembly 72, 72A, 72B. The balancing weight 92 can be of a ring-shape or, as illustrated best in FIG. 1, a C-shape. In an embodiment, two or more balancing weights 92, 92A are attached to the outer surface 80 of the tube 14. In this embodiment, the balancing weights 92, 92A are spaced apart from each other along the tube 14. Also, each of the balancing weights 92, 92A is spaced apart from the damper assembly 72, 72A, 72B and the tube yoke 16 along the driveshaft assembly 10.

As illustrated in FIG. 3, the driveshaft assembly 10 may comprise a second tube yoke assembly 12C. Preferably, the second tube yoke assembly 12C is configured as described above for the tube yoke assembly 12. Thus, in this embodiment, the driveshaft assembly 10 comprises a second tube yoke 16C and a second damper assembly 72C. The second tube yoke 16C is configured as is described above for the tube yoke 16. The second damper assembly 72C is configured as is described above for the damper assembly 72, 72A, 72B. Thus, the second damper assembly 72C comprises a second dampening media and a second inertia ring. The second damper assembly 72C may also comprise a second substrate. The second dampening media may be configured as is described above for the dampening media 76, the second inertia ring may be configured as is described above for the inertia ring 78, and the second substrate may be configured as is described above for the substrate 92A, 92B. The second damper assembly 72C is attached to the second tube yoke 16C as is described above for attaching the damper assembly 72, 72A, 72B to the tube yoke 16. Also, the second tube yoke 16C is attached to the tube 14 at a second end of the tube 14, which is opposite the first end 86 of the tube 14. Preferably, the tube 14 is attached to the second tube yoke 16C by a second weld 90C. The second weld 90C may be as described above for the weld 90, 90A and for attaching the tube yoke 16 to the tube 14.

In accordance with the provisions of the patent statutes, the present invention has been described in what is considered to represent its preferred embodiments. However, it should be noted that the invention can be practiced otherwise than as specifically illustrated and described without departing from its spirit or scope.

The present subject-matter includes, inter alia, the following aspects:
1. A driveshaft assembly, comprising:
   a tube having a balancing weight attached thereto;
   a tube yoke attached to the tube; and
   a damper assembly attached to the tube yoke, wherein the damper assembly comprises a dampening media disposed over an outer surface of the tube yoke and an inertia ring secured to the dampening media.
2. The driveshaft assembly of aspect 1, wherein the dampening media comprises rubber which is tuned to the frequency exhibited by the driveshaft to reduce vibration.
3. The driveshaft assembly of aspect 1, wherein the damper assembly is attached to the tube yoke via a press fit.
4. The driveshaft assembly of aspect 1, wherein the tube yoke comprises a shoulder portion and a seat portion, and the damper assembly abuts the shoulder portion and is positioned around the seat portion.
5. The driveshaft assembly of aspect 1, wherein the tube yoke comprises a pair of spaced apart lug ears, each lug ear having an opening formed therethrough.
6. The driveshaft assembly of aspect 1, further comprising an end fitting coupled to the tube yoke via a cardan type universal joint.
7. The driveshaft assembly of aspect 1, wherein the balancing weight comprises two or more balancing weights, each weight being spaced apart from another weight along the tube and each weight being spaced apart from the damper assembly along the driveshaft assembly.
8. The driveshaft assembly of aspect 1, wherein the damper assembly is of an annular shape and aligned with the tube yoke.
9. The driveshaft assembly of aspect 1, wherein the dampening media defines an inner diameter of the damper assembly.
10. The driveshaft assembly of aspect 1, wherein the dampening media comprises a fluid, gel, thermoplastic, or an elastomeric material.
11. The driveshaft assembly of aspect 1, wherein the inertia ring is separated from the outer surface of the tube yoke by the dampening media.
12. The driveshaft assembly of aspect 1, wherein the damper assembly consists of the dampening media and the inertia ring or the damper assembly consists of the dampening media, the inertia ring and a substrate.
13. The driveshaft assembly of aspect 1, further comprising a second tube yoke, which is attached to the tube, and a second damper assembly attached to the second tube yoke, wherein the second damper assembly comprises a second dampening media in direct contact with an outer surface of the second tube yoke and a second inertia ring secured to the second dampening media.
14. The driveshaft assembly of aspect 4, wherein the damper assembly is disposed between the universal joint and the tube.
15. The driveshaft assembly of aspect 4, wherein the tube yoke further comprises a tube seat portion, and the tube is directly attached to the tube seat portion.
16. A driveshaft assembly, comprising:
   a tube having a balancing weight attached thereto;
   a tube yoke attached to the tube; and
   a damper assembly press fit to the tube yoke, wherein the damper assembly comprises a tuned rubber dampening media in direct contact with an outer surface of the tube yoke and an inertia ring secured to the dampening media.
17. The driveshaft assembly of aspect 16, wherein the damper assembly is of an annular shape and abuts a shoulder portion of the tube yoke.
18. A driveshaft assembly, comprising:
   an end fitting;
   a first tube yoke coupled to the end fitting via a cardan type universal joint;
   a first damper assembly attached to the first tube yoke;
   a tube attached on a first end thereof to the first tube yoke, the tube comprising an outer surface having a balancing weight attached thereto; and
   a second tube yoke attached to a second end of the tube.
19. The driveshaft assembly of aspect 18, wherein the first damper assembly comprises a tuned rubber dampening media and an inertia ring secured to the dampening media.
20. The driveshaft assembly of aspect 19, wherein the first damper assembly further comprises a substrate which is directly attached to the first tube yoke and wherein the dampening media is disposed on the substrate.

## Claims

1. A driveshaft assembly, comprising:
a tube having a balancing weight attached thereto;
a tube yoke attached to the tube; and
a damper assembly attached to the tube yoke, wherein the damper assembly comprises a dampening media disposed over an outer surface of the tube yoke and an inertia ring secured to the dampening media.

2. The driveshaft assembly of claim 1, wherein the dampening media comprises rubber which is tuned to the frequency exhibited by the driveshaft to reduce vibration.

3. The driveshaft assembly of any of the preceding claims, wherein the damper assembly is attached to the tube yoke via a press fit.

4. The driveshaft assembly of any of the preceding claims, wherein the tube yoke comprises a shoulder portion and a seat portion, and the damper assembly abuts the shoulder portion and is positioned around the seat portion.

5. The driveshaft assembly of any of the preceding claims, wherein the tube yoke comprises a pair of spaced apart lug ears, each lug ear having an opening formed therethrough.

6. The driveshaft assembly of any of the preceding claims, further comprising an end fitting coupled to the tube yoke via a cardan type universal joint.

7. The driveshaft assembly of any of the preceding claims, wherein the balancing weight comprises two or more balancing weights, each weight being spaced apart from another weight along the tube and each weight being spaced apart from the damper assembly along the driveshaft assembly.

8. The driveshaft assembly of any of the preceding claims, wherein the damper assembly is of an annular shape and aligned with the tube yoke
and/or
wherein the dampening media defines an inner diameter of the damper assembly and/or
wherein the dampening media comprises a fluid, gel, thermoplastic, or an elastomeric material
and/or
wherein the inertia ring is separated from the outer surface of the tube yoke by the dampening media
and/or
wherein the damper assembly consists of the dampening media and the inertia ring or the damper assembly consists of the dampening media, the inertia ring and a substrate.

9. The driveshaft assembly of any of the preceding claims, further comprising a second tube yoke, which is attached to the tube, and a second damper assembly attached to the second tube yoke, wherein the second damper assembly comprises a second dampening media in direct contact with an outer surface of the second tube yoke and a second inertia ring secured to the second dampening media.

10. The driveshaft assembly of claim 4, wherein the damper assembly is disposed between the universal joint and the tube.

11. The driveshaft assembly of claim 4, wherein the tube yoke further comprises a tube seat portion, and the tube is directly attached to the tube seat portion.

12. A driveshaft assembly, comprising:
a tube having a balancing weight attached thereto;
a tube yoke attached to the tube; and
a damper assembly press fit to the tube yoke, wherein the damper assembly comprises a tuned rubber dampening media in direct contact with an outer surface of the tube yoke and an inertia ring secured to the dampening media.

13. The driveshaft assembly of claim 12, wherein the damper assembly is of an annular shape and abuts a shoulder portion of the tube yoke.

14. A driveshaft assembly, comprising:
an end fitting;
a first tube yoke coupled to the end fitting via a cardan type universal joint;
a first damper assembly attached to the first tube yoke;
a tube attached on a first end thereof to the first tube yoke, the tube comprising an outer surface having a balancing weight attached thereto; and
a second tube yoke attached to a second end of the tube.

15. The driveshaft assembly of claim 14, wherein the first damper assembly comprises a tuned rubber dampening media and an inertia ring secured to the dampening media
and/or
wherein the first damper assembly further comprises a substrate which is directly attached to the first tube yoke and wherein the dampening media is disposed on the substrate.
